# EUROPEAN PATENT SPECIFICATION

(11) **EP 0 720 954 B1**
(45) Date of publication and mention of the grant of the patent: **12.07.2000**
(21) Application number: 96200026.1
(22) Date of filing: 05.01.1996
(51) Int. Cl.: B65D 85/50, A01K 63/00, B65B 25/06

(54) **Method and device for packaging bivalves such as mussels, cockles, and oysters**
Verfahren und Vorrichtung zum Verpacken von zweischaligen Meeresfrüchten wie Muscheln und Austern
Méthode et dispositif pour emballer des bivalves tels que des moules, coques ou huitres

(30) Priority: 05.01.1995 NL 9500027
(43) Date of publication of application: 10.07.1996
(73) Proprietor: Beheermaatschappij Barbé B.V., 4401 NV Yserke (NL)
(72) Inventor: Keizer, Cornelis, Nl-1970 AB IJmuiden (NL)
(74) Representative: Smulders, Theodorus A.H.J., Ir.

(56) References cited:
- DE-C- 510 877
- FR-A- 1 304 698
- FR-A- 2 093 205
- FR-A- 2 109 173
- FR-A- 2 666 075
- US-A- 5 358 101
- PATENT ABSTRACTS OF JAPAN vol. 009, no. 180 (C-293), 25 July 1985 & JP-A-60 049772 (TOPPAN INSATSU KK), 19 March 1985,
- PATENT ABSTRACTS OF JAPAN vol. 009, no. 180 (C-293), 25 July 1985 & JP-A-60 049771 (TOPPAN INSATSU KK), 19 March 1985,

## Description

The invention relates to a method according to the preamble of claim 1. Such a method is known from JP-A-1 291 740.

By shellfish are meant animals having at least two valve parts which are movable relative to each other, which valve parts can be moved relative to each other by the animals between an open and a closed position, and which animals are conveyed alive for consumption.

In the known method, a number of shellfish are put in a bag, after which the bag is vacuumized and closed. The bag is thus airtight. As a consequence of the bag being vacuumized, the shells are pressed against one another, which should better enable the animals to retain the moisture present in the shell, so that they stay alive longer, which benefits the freshness of the packaged shellfish. In the package, the animal gets into a state of apparent death, wherein the metabolism is reduced considerably.

However, in this known method, when the shellfish are packaged, and in particular as a consequence of the bag being vacuumized, the shells open slightly, causing moisture to run from the shell. This adversely affects the quality and staying alive thereof. In fact, in the vacuum, the animals switch over to an anaerobic metabolism involving a minimum energy consumption after the shell has closed. Because of the anaerobic atmosphere in the bag, a biosphere is created wherein anaerobic bacteriological growth takes place. As a result, toxic substances are produced which are dangerous to humans and animals upon consumption of the packaged shellfish.

Dutch laid-open application 91.00047 discloses a method for rendering oysters or like shellfish suitable for dry transportation. In that method, each oyster is individually provided with a tensioning means with which the valve parts are placed on top of each other and held that way, so that moisture is kept within the shell. This prolongs the life span of the animal. However, this method has as a drawback that each animal should be separately treated, which is laborious and time-consuming and therefore costly. Moreover, it requires great care and skill and is a dull manual labor. Further, in particular in the case of small and/or highly bulging or irregularly shaped shells, it is difficult to properly secure the tensioning means on the shells.

To the buyer, this known method has as a drawback that prior to its preparation and/or consumption, each animal should again be stripped of its tensioning means. For relatively expensive shellfish, such as oysters, this may still be acceptable, but for cheaper animals, such as mussels and cockels, this is unacceptable, all the more because these animals are offered and consumed in much larger numbers.

JP 60-49772 discloses a method for packaging shellfish, in particular bivalves, wherein a series of animals is introduced into a package. In this known method the animals are at first individually enclosed within a tightly fitting, net-like package, after which a series of thus closed shellfish are packed into an outer package. The outer package is formed of a foil-like, closed bag to be pressurized, sterilized and treated further. In this known method or package there is no atmospheric pressure within the inner space of the package. Furthermore, in this known method the shellfish packaged are being heat-treated, pressurized and sterilized for obtaining the desired product. Therefore, after the treatment the shellfish are no longer alive, whereas there is no contact between the animals and an oxygen-containing environment.

JP 60-49771 discloses a storage device for packaging shellfish, comprising a rectangular box wherein the shellfish will be pressed into a closed position between the bottom and the lid thereof. These shellfish have a similar shape and dimension and have to be individually positioned very accurately, in order to guarantee the closing pressure. In such package only a limited number of shellfish can be packaged, wherein the shellfish are not closed one against the other. In this known method the shellfish are also heat-treated after packaging, the shell fish being sterilized by increased temperature and pressure, which means that the shellfish will not be stored and shipped alive.

The object of the invention is to provide a method of the type described in the preamble, wherein a series of shellfish can be packaged in a simple and safe manner, wherein a long life span of the packaged shellfish is obtained and the shellfish are kept in a condition suitable for consumption.

To that end, a method according to the invention is characterized by the features of the characterizing part of claim 1.

With the method according to the invention, a series of shellfish can be packaged alive and dry, i.e. outside their natural habitat, in closed condition and in one package, with an aerobic atmosphere being maintained in the package. This involves the shells retaining the moisture present therein, as a result of which they stay alive for a long time and almost retain their original weight. Owing to the aerobic environment and the closed condition, there is no production of toxic substances and infection of the animals is prevented.

Since the shellfish keep their weight and retain the moisture in the shell, a filled package maintains the weight originally introduced into the package for a relatively long time. This offers the additional, surprising advantage that during filling in an open package, no overweight needs to be provided, which saves costs. Moreover, less waste occurs and, besides, the animals themselves keep their weight as well, firm and tender. A further advantage of keeping the shells closed is that the package need not be moisture-proof, or relatively simple measures can be taken to retain the moisture in the package. After all, hardly any leakage occurs. As a result, the oxygen provision to the animals remains possible in a simple manner. Moreover, hygienic packages are thus obtained which can directly be offered in a shop, if so desired.

The invention further relates to a package for several live shellfish according to the preamble of claim 9. According to the invention, this package is characterized by the features of the characterizing part of claim 9. Such a package is in particular suitable for use in a method according to the invention.

The explain the invention, a number of exemplary embodiments of a package and a method will be described hereinafter, with reference to the accompanying drawings, wherein:
Fig. 1 shows a cross section through a first exemplary embodiment of a package, filled with shellfish;
Fig. 2 shows a cross section through a second exemplary embodiment of a package, filled with shellfish;
Fig. 3 shows a cross section through a third exemplary embodiment of a package, filled with shellfish; and
Fig. 4 is a side elevation of a net-shaped package, filled with shellfish.

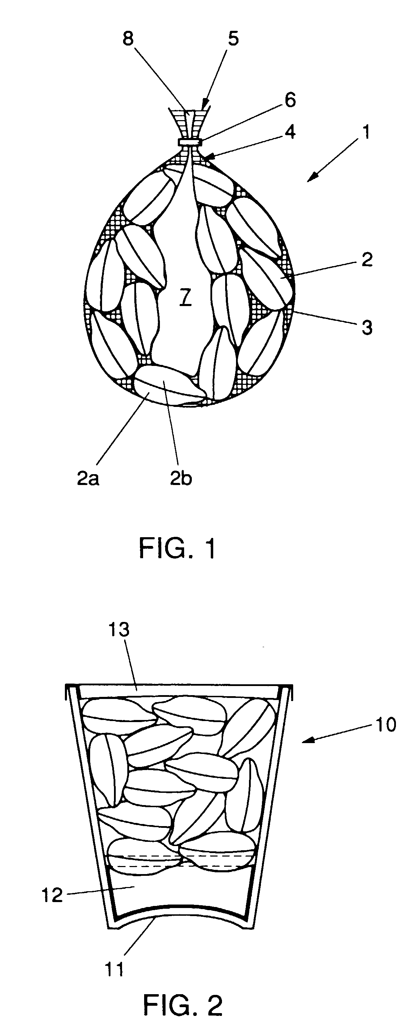

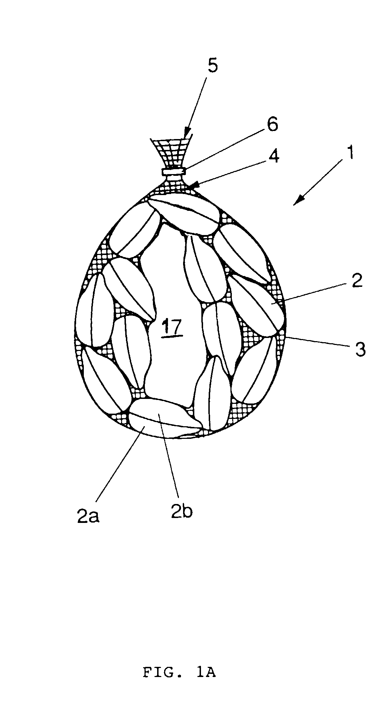

Fig. 1 shows a cross section of a package 1 filled with shellfish 2, for instance mussels. Each shellfish has at least two valve parts 2a, 2b, movable relative to each other. A live shellfish 2 should remain moist in order to keep its weight and to stay alive. For that purpose, the valve parts 2a, 2b should be brought into a closed position and held that way during packaging, so that moisture is kept within the shell 2.

The package 1 consists of a net-shaped bag 3 with an inner space 4 having a filling opening 5 at its top side. The filling opening is closable by means of a suitable means 6, for instance a clamping strip, clip or the like, or by making a knot in the bag 3. Included in the inner space 4 is an inflatable balloon 7 or a like expansion means, inflatable when the package 1 is closed. For that purpose, in the embodiment shown in Fig. 1, the balloon 7 has its collar 8 extending through the opening 5 outside the bag 3. However, it is also possible to include for instance a gas cartridge in the bag for inflating the balloon 7, or to use a self-inflating balloon 7 which has been emptied and sealed prior to being inserted into the bag, and which can be opened after the filling and closing of the bag 3, so that it will fill up and expand.

The package according to Fig. 1 can be used as follows.

Via the opening 5, a series of shellfish, for instance mussels, are introduced into the inner space 4 of the bag 3, around the balloon 7. Next, the bag 3 is shaken a few times in order to get the shellfish close together, and is then closed tightly around the shells 2 by means of the closing means 6, with the collar 8 of the balloon 7 being optionally kept outside the bag 3. When the shellfish are being processed and supplied into the bag, they are moved in such a manner that they will close the shells of their own accord. To prevent or at least minimize stress in the animals, the shells should be shaken only slightly. Because in the method according to the invention, the shells are closed and held in closed condition against one another, the degree of movement can easily be limited. After the filling and closing of the package, the balloon 7 is inflated so that the shells 2 are firmly pressed and held against one another, against the bag 3 and/or against the balloon 7. By 'firmly' is meant here that the force exerted on the individual valve parts 2a, 2b is such that the shells 2 are closed and the shellfish 2 can no longer independently press the valve parts 2a, 2b apart, while moisture contained in the shells during packaging is at least substantially retained therein.

In Fig. 1, only a limited number of shellfish are shown in the bag, but between the balloon 7 and the wall of the bag 3, several layers of shellfish can be included, and several balloons 7 can be included. As balloon, any inflatable means can be used. The bag 3 being net-shaped, air can readily move into and out of the inner space, so that the shellfish in closed condition remain in an oxygen-rich environment. As a result, the animals keep functioning aerobically and stay alive. The pressure in the package remains substantially atmospheric, which benefits the animals.

In an alternative embodiment, included in the bag as an expansion means is a balloon filled with and expansion material which increases in volume after having been contacted with for instance a gas such as air, with a fluid such as water, or through the mixing of a number of separate components.

Fig. 1A shows an advantageous embodiment of a package 1, wherein instead of the balloon 7 in Fig. 1, one or a series of sachets 17 is included. Each sachet 17 contains a relatively slight amount of dry ice, i.e. solid carbon dioxide or the like, and is packaged together with the shellfish. Owing to the supply of heat from the surroundings, in particular from the shellfish, the dry ice will sublime. The thus produced gas will pressurize the sachet. Of course, the pressure depends on the size of the sachet and on the amount of dry ice and can hence be suitably selected. The pressure built up in the or each sachet 17 will close the shellfish and keep them closed. Under the influence of the heat supplied, the expansion of the sachets will take up some time, which has the advantage that the shellfish can rearrange somewhat to form a dense stacking.

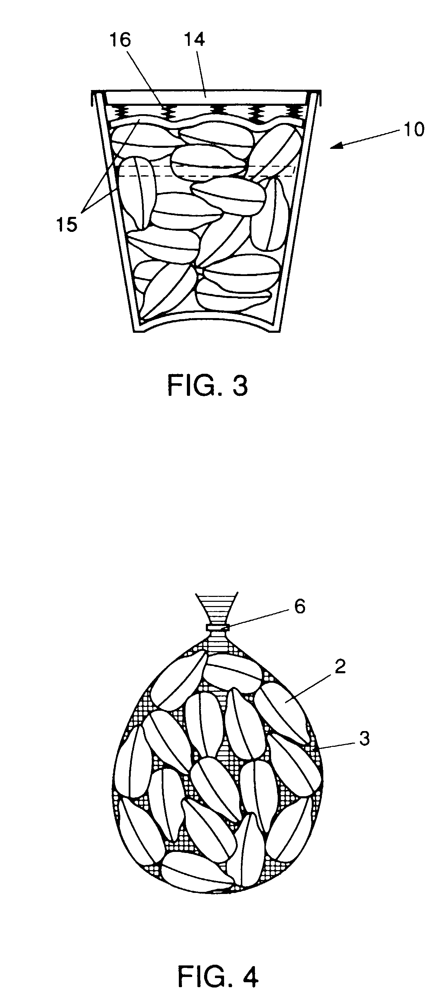

Fig. 2 shows a first alternative embodiment of a package according to the invention, in the form of a container 10, for instance a plastic bucket or a wire basket. Included adjacent the bottom 11 of the container 10 is a compartment 12 which is compressible, elastic and/or plastic. This compartment 12 may for instance consist of a hollow block of plastic, a block of open or closed foam, a block of oasis® or the like. The container 10 is sealable with a lid 13 which can be firmly secured on the container 10.

The package can be used as follows.

From the top side, a number of shellfish 2 are dumped into the container 10 onto the compartment 12, causing a dense stacking. Such a number of shellfish 2 are introduced into the container 10 that the uppermost shellfish 2 are higher than the height at which the lid 13 should extend in closed condition. Accordingly, when the lid 13 is placed, the shellfish 2 are pressed in the direction of the bottom 11, and the compartment is deformed elastically and/or plastically while a force is being exerted on the shells. This force is such that the shells 2 are all closed and held that way. When there is free communication between the environment and the inner space of the container 10, the pressure in the container 10 is almost atmospheric, but in the case of an airtight container 10, it can be increased to become superatmospheric, for instance to a pressure which is experienced by the shellfish in their natural environment. In that case, however, sufficient oxygen should be present in the container in order to have the animals function aerobically during almost the entire packaging time.

As a matter of fact, instead of the compartment, an expansion means 7 as described with reference to Fig. 1 can of course also be provided. If a plastic bucket is used as container, air holes can for instance be provided in the wall of the bucket and/or the lid to supply sufficient oxygen in the container.

Fig. 3 shows an alternative embodiment of a container 10 according to Fig. 2. In this embodiment, the lid 14 comprises a preferably deformable plate 15, arranged under the lid at a distance therefrom. By means of resilient means 16, the plate 15 is connected to the lid 14.

The package in this embodiment can be used as follows.

After the container 10 has been filled to a level adjacent the upper rim thereof, higher than the level at which the plate would normally be located when the lid is placed on an empty container, the lid 14 is pressed onto the container. This involves the plate 15 being pressed upwards by the shellfish 2, in the direction of the lid 14, against the action of the resilient means 16. The plate 15 can deform to the shape of the shells abutting against it. Hence, by the resilient means 16 and the plate 15 a force is applied to the valve parts 2a, 2b of the shellfish 2. This force is sufficiently great to close the shells and keep them closed. The resilient means may comprise springs, but also for instance a deformable block or elastic ridges, bumps and the like.

Fig. 4 is a view of a net 3 according to the invention, filled with shellfish 2. In this embodiment, the net 3 is closed tightly around the shellfish 2, while closing the shells. Next, the bag 3 is closed with a means 6 suiting that purpose, so that the shells 2 remain closed and hence the moisture is kept within the shells and the animals are kept in an aerobic situation for a relatively long period. The animals remain fresh, at their proper weight and suitable for consumption.

The invention is by no means limited to the embodiments as described and shown in the Figures. Many variations are possible. These modifications are understood to fall within the scope of the invention as defined by the claims. For instance different packaging means can be applied, such as for instance boxes or metal or plastic wire nets, and the expansion means or deforming means can be of a one-piece design with the package. Moreover, deformation of the package itself may result in the desired force required for closing the shells. Further, embodiments may be composed having different types of expansion or deforming means.

## Claims

1. A method for packaging and shipping live bivalves (2) such as mussels, cockels and oysters, wherein a series of animals are introduced into a package (1, 10) and the animals (2) are then pressed onto and against one another by means of at least a part of the package (1, 10), characterized in that the bivalves (2) are introduced into the package (1, 10) and moved in such a manner that they will close the shells of their own accord, and whereby the bivalves (2) are pressed together such that the valve parts (2a, 2b) of each animal are closed against each other and thus are always kept closed in the package (1, 10), the pressure within the package being kept substantially atmospheric or superatmospheric and the animals (2) being kept in contact with an oxygen-containing environment, such that the animals can be packaged and shipped within the package alive.

2. A method according to claim 1, characterized in that the animals (2) are pressed onto and against one another by reducing the space available for the shells in the inner space of the package (1, 10).

3. A method according to claim 1 or 2, characterized in that the animals are pressed onto and against one another through deforming means (7, 17, 12, 16) which deform when the package is closed, so that the valves of the animals (2) are closed through abutment against the package (1, 10), the deforming means (7, 17, 12, 16) and/or one another (2), while a further deformation of the deforming means (7, 17, 12, 16) requires a greater force than can be supplied by the animals for opening the valves.

4. A method according to any one of claims 1-3, characterized in that expansion means (7, 17) are used which are expanded after the filling and closing of the package (1, 10), so that the space available to the shellfish (2) in the package is limited thereby.

5. A method according to claim 3, characterized in that as deforming means (12, 16), elastically deformable means (12, 16) are used, which are elastically deformed upon closure of the package, after the filling thereof.

6. A method according to claim 3, characterized in that as deforming means, plastically deformable means (12) are used, which are plastically deformed upon closure of the package, after the filling thereof.

7. A method according to any one of claims 1-6, characterized in that as package a preferably net-shaped plastic bag (3) is used which is tied up (6) after the filling thereof, the bag being pulled closed in such a manner that the shells of the packaged animals (2) are closed thereby and are always kept closed in the packaged condition.

8. A method according to claim 4, characterized in that the expansion means (17) are expanded through sublimation of solidified gas included therein, in particular dry ice.

9. A package (1, 10) enclosing a plurality of live bivalves such as mussels, cockels and oysters, comprising a closable inner space (4) enclosed by a wall (3, 11), pressure means (7, 17, 12, 16) being provided for closing and keeping closed the shells of the animals (2), characteri ed in that the pressure means (7, 17, 12, 16) close and keep closed the shells of the animals (2) by pressing said animals against one another after the filling of the package (1, 10), the inner space being substantially at atmospheric or superatmospheric pressure and an oxygen-containing environment being maintained in the inner space, so as to have the animals fonction aerobically during almost the entire packaging time.

10. A package according to claim 9, characterized in that the pressure means comprise expansion means (7, 17) extending at least partly in the inner space (4), which expansion means (7, 17) can be expanded after the filling and closing of the package.

11. A package according to claim 10, characterized in that the expansion means comprise inflatable means (7), preferably balloon-shaped.

12. A package according to claim 10 or 11, characterized in that during the packaging of the shellfish in the package, the expansion means (17) comprise solidified gas, in particular dry ice, having a volume such that during sublimation, said gas can expand the or each expansion means to the desired expansion.

13. A package according to any one of claims 10-12, characterized in that the expansion means comprise a flexible compartment containing means which expand when contacted with a gas and/or a fluid.

14. A package according to any one of claims 9-13, characterized in that the pressure means comprise an elastically and/or plastically deformable pressure part (12, 16).

15. A package according to claim 14, characterized in that the pressure part comprises a foam block (12).

16. A package according to claim 14, characterized in that the pressure part comprises a resilient plate (14, 12).

17. A package according to any one of claims 9-16, characterized in that the wall of the package is wire-shaped or net-shaped (3).

18. A package according to any one of claims 9-17, characterized in that the package is container-shaped (10).

## Patentansprüche

1. Verfahren zum Verpacken und Versenden lebender zweischaliger Meeresfrüchte (2), wie Miesmuscheln, Herzmuscheln und Austern, bei dem eine Reihe von Tieren in eine Verpackung (1, 10) eingeführt wird und die Tiere (2) anschließend mittels wenigstens eines Teils der Verpackung (1, 10) auf- und aneinander gedrückt werden, dadurch gekennzeichnet, daß die zweischaligen Meeresfrüchte (2) in die Verpackung (1, 10) eingeführt und derart bewegt werden, daß sie ihre Schalen aus sich heraus schließen, und wobei die zweischaligen Meeresfrüchte (2) derart zusammengedrückt werden, daß die Schalenteile (2a, 2b) jedes Tieres gegeneinander geschlossen sind und somit in der Verpakkung (1, 10) stets geschlossen gehalten werden, wobei der Druck in der Verpakkung im wesentlichen gleich dem Atmosphärendruck oder über diesem gehalten wird und die Tiere (2) in Kontakt mit einer sauerstoffhaltigen Umgebung gehalten werden, so daß die Tiere lebend verpackt und in der Verpackung versendet werden können.

2. Verfahren nach Anspruch 1, dadurch gekennzeichnet, daß die Tiere (2) durch Verringern des für die Schalen im Inneren der Verpackung zur Verfügung stehenden Raumes an- und gegeneinander gedrückt werden.

3. Verfahren nach Anspruch 1 oder 2, dadurch gekennzeichnet, daß die Tiere durch Verformungseinrichtungen (7, 17, 12, 16) an- und gegeneinander gedrückt werden, die sich beim Schließen der Verpackung verformen, so daß die Schalen der Tiere (2) durch Anlage an der Verpackung (1, 10), die Verformungseinrichtungen (7, 17, 12, 16) und/oder aneinander geschlossen werden, wobei eine weitere Verformung der Verformungseinrichtungen (7, 17, 12, 16) eine größere Kraft erfordert, als die Tiere zum Öffnen der Schalen aufbringen können.

4. Verfahren nach einem der Ansprüche 1-3, dadurch gekennzeichnet, daß Expansionseinrichtungen (7, 17) verwendet werden, die nach dem Füllen und Schließen der Verpackung (1, 10) eingesetzt werden, um durch diese den für die Meeresfrüchte (2) in der Packung zur Verfügung stehenden Raum zu begrenzen.

5. Verfahren nach Anspruch 3, dadurch gekennzeichnet, daß als Verformungseinrichtungen (12, 16) elastisch verformbare Einrichtungen (12, 16) verwendet werden, die nach dem Füllen beim Schließen der Verpackung elastisch verformt werden.

6. Verfahren nach Anspruch 3, dadurch gekennzeichnet, daß als Verformungseinrichtungen (12, 16) plastisch verformbare Einrichtungen (12, 16) verwendet werden, die nach dem Füllen beim Schließen der Verpackung plastisch verformt werden.

7. Verfahren nach einem der Ansprüche 1-6, dadurch gekennzeichnet, daß als Verpackung eine vorzugsweise netzförmige Kunststofftasche (3) verwendet wird, die nach dem Befüllen zugebunden (6) wird, wobei die Tasche derart zugezogen wird, daß die Schalen der verpackten Tiere (2) dadurch geschlossen werden und im verpackten Zustand stets geschlossen gehalten werden.

8. Verfahren nach Anspruch 4, dadurch gekennzeichnet, daß die Expansionseinrichtung (17) durch Sublimation darin enthaltenen verfestigten Gases, insbesondere Trockeneis, ausgedehnt wird.

9. Verpackung (1, 10), die mehrere lebende zweischalige Meeresfrüchte, wie Miesmuscheln, Herzmuscheln und Austern, umschließt, mit einem verschließbaren Innenraum (4), der von einer Wand (3, 11) umgeben ist, wobei Druckeinrichtungen (7, 17, 12, 16) zum Schließen und Geschlossenhalten der Schalen der Tiere (2) vorgesehen sind, dadurch gekennzeichnet, daß die Druckeinrichtungen (7, 17, 12, 16) die Schalen der Tiere (2) schließen und geschlossen halten, indem die Tiere nach dem Füllen der Verpackung (1, 10) gegeneinander gedrückt werden, wobei der Innenraum im wesentlichen Atmosphärendruck oder Überdruck aufweist, und eine sauerstoffhaltige Umgebung im Innenraum aufrechterhalten wird, so daß die aeroben Funktionen der Tiere während beinahe des gesamten Verpackungszeitraums gewahrt bleiben.

10. Verpackung nach Anspruch 9, dadurch gekennzeichnet, daß die Druckeinrichtungen Expansionseinrichtungen (7, 17) aufweisen, die sich wenigstens teilweise in den Innenraum (4) erstrecken, wobei die Expansionseinrichtungen (7, 17) nach dem Füllen und dem Schließen der Verpackung gedehnt werden können.

11. Verpackung nach Anspruch 10, dadurch gekennzeichnet, daß die Expansionseinrichtung eine vorzugsweise ballonförmige inflatierbare Einrichtung (7) aufweist.

12. Verpackung nach Anspruch 10 oder 11, dadurch gekennzeichnet, daß während des Verpackens der Meeres früchte in der Verpackung, die Expansionseinrichtung (17) verfestigtes Gas, insbesondere Trockeneis, mit einem derartigen Volumen aufweist, daß das Gas während der Sublimation ein Dehnen der oder jeder Expansionseinrichtung mit dem gewünschten Expansionsgrad bewirkt.

13. Verpackung nach einem der Ansprüche 10-12, dadurch gekennzeichnet, daß die Expansionseinrichtung einen flexiblen Raum mit einer Einrichtung aufweist, die sich beim Kontakt mit einem Gas und/oder einem Fluid zusammenzieht.

14. Verpackung nach einem der Ansprüche 9-13, dadurch gekennzeichnet, daß die Druckeinrichtung ein elastisch und/oder plastisch verformbares Druckteil (12, 16) aufweist.

15. Verpackung nach Anspruch 14, dadurch gekennzeichnet, daß das Druckteil einen Schaumstoffblock (12) aufweist.

16. Verpackung nach Anspruch 14, dadurch gekennzeichnet, daß das Druckteil eine elastische Platte (14, 12) ausweist.

17. Verpackung nach einem der Ansprüche 9-16, dadurch gekennzeichnet, daß die Wand der Verpackung draht- oder netzförmig (3) ist.

18. Verpackung nach einem der Ansprüche 9-17, dadurch gekennzeichnet, daß die Verpackung die Form eines Behälters (10) hat.

## Revendications

1. Procédé de conditionnement et d'expédition de coquillages bivalves vivants (2) tels que les moules, les coques et les huîtres, dans lequel une série d'animaux est introduite dans un emballage (1, 10) et les animaux (2) sont alors comprimés les uns sur les autres et contre les autres à l'aide d'une partie au moins de l'emballage (1, 10), caractérisé en ce que les bivalves (2) sont introduits dans l'emballage (1, 10) et déplacés de manière qu'ils ferment d'eux-mêmes leur coquille, et que les bivalves (2) soient comprimés de sorte que les parties de valve (2a, 2b) de chaque animal soient fermées l'une contre l'autre et soient toujours maintenues dans l'emballage (1, 10), la pression dans l'emballage étant maintenue pratiquement à la pression atmosphérique ou à une pression supérieure à la pression atmosphérique et les animaux (2) étant maintenus au contact d'un milieu contenant de l'oxygène, si bien que les animaux peuvent être conditionnés et expédiés vivants dans l'emballage.

2. Procédé selon la revendication 1, caractérisé en ce que les animaux (2) sont comprimés les uns sur les autres et contre les autres par réduction de l'espace disponible pour les coquillages dans l'espace interne de l'emballage (1, 10).

3. Procédé selon la revendication 1 ou 2, caractérisé en ce que les animaux sont comprimés les uns sur les autres et contre les autres à l'aide d'un dispositif de déformation (7, 17, 12, 16) qui se déforme lorsque l'emballage est fermé, si bien que les valves des animaux (2) sont fermées par butée contre l'emballage (1, 10), contre le dispositif de déformation (7, 17, 12, 16) et/ou les unes contre les autres (2), alors qu'une déformation supplémentaire du dispositif de déformation (7, 17, 12, 16) nécessite une plus grande force que celle qui peut être appliquée par les animaux pour l'ouverture des valves.

4. Procédé selon l'une quelconque des revendications 1 à 3, caractérisé en ce qu'un dispositif de dilatation (7, 17) est utilisé et subit une dilatation après le remplissage et la fermeture de l'emballage (1, 10), si bien que l'espace disponible pour les coquillages (2) dans l'emballage est ainsi limité.

5. Procédé selon la revendication 3, caractérisé en ce qu'on utilise, comme dispositif de déformation (12, 16), un dispositif élastiquement déformable (12, 16) qui est déformé élastiquement lors de la fermeture de l'emballage, après le remplissage de celui-ci.

6. Procédé selon la revendication 3, caractérisé en ce qu'on utilise, comme dispositif de déformation, un dispositif plastiquement déformable (12) qui se déforme plastiquement après fermeture de l'emballage, après le remplissage de celui-ci.

7. Procédé selon l'une quelconque des revendications 1 à 6, caractérisé en ce qu'on utilise, comme emballage, un sac (3) de matière plastique, de préférence en forme de tulle, qui est lié (6) après son remplissage, le sac étant tiré en position de fermeture de manière que les coquilles des animaux conditionnés (2) soient ainsi fermées et soient' toujours maintenues fermées à l'état conditionné.

8. Procédé selon la revendication 4, caractérisé en ce que le dispositif de dilatation (17) subit une dilatation par sublimation d'un gaz solidifié incorporé, en particulier de neige carbonique.

9. Emballage (1, 10) renfermant plusieurs coquillages bivalves vivants tels que les moules, les coques et les huîtres, comprenant un espace interne (4) qui peut être fermé et qui est entouré par une paroi (3, 11), et un dispositif de pression (7, 17, 12, 16) disposé afin qu'il ferme et maintienne fermées les coquilles des animaux (2), caractérisé en ce que le dispositif de pression (7, 17, 12, 16) ferme et maintient fermées les coquilles des animaux (2) par application d'une pression aux animaux les uns contre les autres après remplissage de l'emballage (1, 10), l'espace interne étant pratiquement à la pression atmosphérique ou à une pression supérieure à la pression atmosphérique et une atmosphère contenant de l'oxygène étant maintenue dans l'espace interne, afin que les animaux aient une fonction aérobie pendant presque tout le temps de conditionnement.

10. Emballage selon la revendication 9, caractérisé en ce que le dispositif de pression comporte un dispositif de dilatation (7, 17) qui s'étend au moins partiellement dans l'espace interne (4), le dispositif de dilatation (7, 17) pouvant subir une dilatation après le remplissage et la fermeture de l'emballage.

11. Emballage selon la revendication 10, caractérisé en ce que le dispositif de dilatation comporte un dispositif gonflable (7), de préférence en fors de ballon.

12. Emballage selon la revendication 10 ou 11, caractérisé en ce que, pendant le conditionnement des coquillages dans l'emballage, le dispositif de dilatation (17) est un gaz solidifié, en participer de la neige carbonique, dont le volume est tel que, pendant la sublimation, le gaz peut dilater le dispositif ou chaque dispositif de dilatation en assurant la dilatation voulue.

13. Emballage selon l'une quelconque des revendications 10 à 12, caractérisé en ce que le dispositif de dilatation comporte un compartiment souple contenant un dispositif qui se dilate lorsqu'il est au contact d'un gaz et/ou d'un fluide.

14. Emballage selon l'une quelconque des revendications 9 à 13, caractérisé en ce que le dispositif de pression comporte une partie élastiquement et/ou plastiquement déformable de pression (12, 16).

15. Emballage selon la revendication 14, caractérisé en ce que la partie de pression est un bloc de mousse (12).

16. Emballage selon la revendication 14, caractérisé en ce que la partie de pression est une plaque élastique (14, 12).

17. Emballage selon l'une quelconque des revendications 9 à 16, caractérisé en ce que la paroi de l'emballage a une forme donnée par des fils métalliques ou de tulle (3).

18. Emballage selon l'une quelconque des revendications 9 à 17, caractérisé en ce que l'emballage a la forme d'un récipient (10).
